# EUROPÄISCHE PATENTSCHRIFT

(11) **EP 0 726 634 B1**
(45) Veröffentlichungstag und Bekanntmachung des Hinweises auf die Patenterteilung: **12.01.2000**
(21) Anmeldenummer: 96101812.4
(22) Anmeldetag: 08.02.1996
(51) Int. Cl.: H02J 13/00

(54) **Funk-Rundsteuerempfänger**
Radio-remote control receiver
Récepteur de télécommande par radio

(30) Priorität: 10.02.1995 DE 19504149
(43) Veröffentlichungstag der Anmeldung: 14.08.1996
(73) Patentinhaber: LIC-LANGMATZ GMBH, D-82467 Garmisch-Partenkirchen (DE)
(72) Erfinder:
(74) Vertreter: Flosdorff, Jürgen, Dr.

(56) Entgegenhaltungen:
- EP-A- 0 108 244
- WO-A-83/03243
- GB-A- 2 137 837
- GB-A- 2 212 349
- GB-A- 2 234 397

## Beschreibung

Die Erfindung betrifft einen Funk-Rundsteuerempfänger, der für viele verschiedene Steuerungs-, Schalt- und Lastführungsaufgaben einsetzbar ist. Als Beispiele für das Einsatzgebiet des erfindungsgemäßen Funk-Rundsteuerempfängers seien genannt: Umschalten von Mehrtarif- und Maximumstromzählern, Schalten der Straßenbeleuchtung, Heizgruppensteuerung, Lastbeeinflussung in Industrieunternehmen, Steuerung von Speicherheizung, Warmwasserbereiter, Klimageräten, Industrieöfen und Kühlanlagen und dergleichen mehr. Die Erfindung wird weiter unten im Zusammenhang mit einer bevorzugten Anwendungsform der Umschaltung von Mehrtarifstromzählern beschrieben.

In der Bundesrepublik Deutschland betreiben viele Energieversorgungsunternehmen eine drahtgebundene Rundsteuerung, um Steuerbefehle an eine große Anzahl von Empfängern in ihrem Versorgungsbereich zu übertragen. Mit diesen Signalen werden bereits Tarifzähler, Straßenbeleuchtung und Lastführungsaufgaben optimal geschaltet. Mit der Rundsteuerung läßt sich die Einspeisung von Spitzenlasten minimieren, wodurch die Energieerzeugungskosten gesenkt werden können und sich der Bau einiger zusätzlicher Kraftwerke einsparen läßt. Die drahtgebundene Rundsteuerung hat aber den Nachteil, daß sie mit beträchtlichen Kosten verbunden ist und daß vielfältige Probleme in der Informationsübermittlung aufgetreten sind.

Diese Nachteile lassen sich durch die Funk-Rundsteuerung vermeiden, die aus mehreren Elementen besteht, nämlich einem Zentralrechner, einem Langwellensender und den Funk-Rundsteuerempfängern, die Gegenstand der vorliegenden Patentanmeldung sind.

Der Zentralrechner hat unter anderem die Aufgabe, die Telegramme der Teilnehmer des Systems an den Langwellensender weiter zu geben. Dieser arbeitet bevorzugt mit einer Trägerfrequenz von 129,1 kHz, wobei die Modulation nach dem FSK-Verfahren (Frequency-Shift-Keying) erfolgt.

Die Funktelegramme werden von einem Funk-Rundsteuerempfänger empfangen, der die Signale des Senders umsetzt und beispielsweise mittels eines Impulsgebers einen Tarifzähler von Hoch- auf Niedrigtarif umschaltet.

Aus der US 4,406,924 ist bereits ein Funk-Rundsteueremmpfänger bekannt, bei dem eine Ferrit-Antenne, ein Funkempfänger und eine Dekodereinrichtung innerhalb des Gehäuses des Rundsteuerempfängers angeordnet sind. Dieser bekannte Funk-Rundsteuerempfänger ist beispielsweise zum Tarif-Umschalten von Stromzählern vorgesehen und befaßt sich mit dem Problem, daß der Rundsteuerempfänger häufig an einer Stelle angeordnet werden muß, an der der Empfang von Funksignalen schlecht ist.

Bei dem Rundsteuerempfänger gemäß der US-PS soll dieses Problem dadurch gelöst werden, daß die in dem Gehäuse angeordnete Antenne eine Ringantenne ist, die die zu dem Stromzähler führende elektrische Leitung umschließt. Da die elektrischen Leitungen eines Gebäudes über das ganze Haus verteilt sind, wirken diese elektrischen Leitungen als großräumige Antenne für den Rundsteuerempfänger, der die von den elektrischen Leitungen aufgenommenen Funksignale über die Ringantenne erhält.

Diese Ausbildung hat den Nachteil, daß die elektrischen Leitungen des Gebäudes sämtliche auftretenden elektrischen Störungen einfangen, die beispielsweise durch elektrische oder elektronische Geräte hervorgerufen werden. Mittels der nicht verstellbaren Ringantenne ist daher das Problem des Empfangs von Funksignalen an einem vorgegebenen Einbauort des Rundsteuerempfängers, der sich üblicherweise im Keller eines Gebäudes befindet, nicht zu lösen.

Aus der GB-A-2212349 ist ein Funk-Rundsteuerempfänger bekannt, bei dem die innerhalb des Gehäuses angeordnete Antenne von der Außenseite des Gehäuses aus verschwenkt werden kann, um einen möglichst guten Empfang der Funksignale zu erreichen. Hierzu durchgreift ein Steuerknopf die Gehäusewand, mit dem die Antenne über einen Winkel von 60° oder beispielsweise 90° gedreht werden kann. Auch die GB-A-2 234 397 offenbart eine drehbare Befestigung einer Antenne an einem Funk-Rundsteuerempfänger.

Der vorliegenden Erfindung liegt die Aufgabe zugrunde, einen Rundsteuerempfänger so auszubilden, daß mit ihm auch an Orten ungünstiger Empfangsfeldstärken wie beispielsweise in Kellern in der Nähe von Stromzählern ein möglichst guter Empfang der Funksignale ermöglicht ist, wobei zudem Manipulation des Empfangs durch Unbefugte ausgeschlossen sein sollen.

Diese Aufgabe wird erfindungsgemäß durch die im Patentanspruch 1 angegebenen Merkmale gelöst.

Vorteilhafte Weiterbildungen der Erfindung sind in den Unteransprüchen gekennzeichnet.

Der erfindungsgemäße Funk-Rundsteuerempfänger enthält eine Ferrit-Antenne, einen integrierten, bevorzugt abgeschirmten Funk-Empfänger, eine Dekoder-Einheit und bevorzugt ferner Steuerrelais, wobei diese miteinander verbundenen Bauteile in einem gemeinsamen Gehäuse angeordnet sind.

An der Antenne wird das vorhandene Signal empfangen und über Filter und Mischer ausgekoppelt. Das so gewonnene digitale Schalttelegramm wird von der Dekodereinheit decodiert und in ein Telegramm umgesetzt, das die Relais schalten läßt, wodurch beispielsweise ein Tarifzähler von Hochtarif zu Niedrigtarif (oder umgekehrt) geschaltet wird.

Ferner ist vorgesehen, daß die stabförmige Ferrit-Antenne derart in einer Aufnahmekammer des Gehäuses des Rundsteuerempfängers angeordnet ist, daß sie mindestens um 180°- drehbar ist, daß dieser Aufnahmeraum der Ferrit-Antenne eine zu öffnende Abdeckung hat, so daß die Winkellage der Ferrit-Antenne im montierten Zustand des Gehäuses von außen einstellbar ist, und daß die Abdeckung des Aufnahmeraumes so durch eine Sicherungseinrichtung verschließbar ist, daß sie von Unbefugten nur gewaltsam geöffnet werden kann.

Es hat sich überraschenderweise gezeigt, daß mit der stabförmigen Ferrit-Antenne, die zwangsläufig nur sehr kurz ist, da sie in dem kleinen Gehäuse des Rundsteuerempfängers untergebracht ist, ein hinreichend guter Empfang von Funksignalen erreicht werden kann, wenn diese Antenne optimal ausgerichtet wird. Dies läßt sich dadurch erreichen, daß der Aufnahmeraum, in dem sich die Ferrit-Antenne befindet, eine zu öffnende Abdeckung hat, durch die die Winkellage der Antenne von außen einstellbar ist.

Nach einem weiteren wesentlichen Gesichtspunkt der Erfindung ist die Abdeckung des Aufnahmeraums der Antenne so zu sichern, daß sie von Unbefugten nur gewaltsam geöffnet werden kann. Hierdurch wird verhindert, daß Unbefugte durch Verstellen der Antenne den Funk-Rundsteuerempfänger funktionsunfähig machen können.

Die Ferrit-Antenne ist in der Einbaulage des Gerätes horizontal angeordnet.

Erfindungsgemäß ist vorgesehen, daß in dem Aufnahmeraum zwei Haltevorrichtungen für die Ferrit-Antenne vorgesehen sind, die so angeordnet sind, daß die Ferrit-Antenne in einer von zwei zueinander senkrechten Lagen lösbar befestigbar ist. Dies bedeutet, daß die Ferrit-Antenne in zwei Montagearten horizontal angeordnet werden kann. Die sehr kurze Ferrit-Antenne, die bevorzugt nur eine Länge von 50 mm hat, findet dabei in dem notwendigerweise kleinen Aufnahmeraum des Rundsteuerempfängers einen ausreichenden Platz.

Wenn der erfindungsgemäße Funk-Rundsteuerempfänger zum Umschalten von Stromzählern verwendet wird, ist der Einbauort für den jeweiligen Anwendungsfall vorgegeben. Dabei kann der erfindungsgemäße Funk-Rundsteuerempfänger entweder in der sogenannten Huckepack-Montage angebracht werden, bei dem der Rundsteuerempfänger auf dem zugehörigen Zähler sitzt, oder aber er kann wie ein normaler Zähler in aufrechter Anordnung auf dem Zählerkreuz montiert werden.

Nach einem weiteren Gesichtspunkt der Erfindung kann es sich bei der Ferrit-Antenne um eine aktive Antenne handeln, die mit Halbleitern versehen ist.

In weiterer Ausgestaltung besteht die Ferrit-Antenne aus einem geradlinigen, ca. 50 mm langen Ferrit-Stab, an dem eine Leiterplatte liegt, die mit aktiven Halbleiterbauelementen zum Abgleich der Resonanzfrequenz bestückt ist. Diese Bauteile sind von einem Isolierschlauch aus Kunststoff, vorzugsweise einem Schrumpfschlauch umgeben. Die Induktivität wird durch eine Kupferwicklung auf dem Ferrit-Stab erzeugt, wobei zur Verbesserung der Wirkung die Kondensatoren angeordnet sind, die einen Resonanzkreis bilden.

Die Ferrit-Antenne ist vorzugsweise um 180° drehbar gehalten und mit einem Stift oder beispielsweise einem etwa halbkreisförmigen Rändelrad versehen, um von Hand in die optimale Lage eingestellt zu werden.

Der Aufnahmerraum der Ferrit-Antenne ist mit einer Abdeckung versehen, die im geöffneten Zustand die Einstellung der Winkellage der Ferrit-Antenne von außen, bevorzugt von der Frontseite des Gehäuses aus, zuläßt. Die Abdeckung kann durch eine Kappe gebildet sein, die an einer Seite angelenkt ist oder einen Gehäusevorsprung untergreift und an der gegenüberliegenden Seite lösbar in eine Gehäusewand einrastet.

Nach einem weiteren Vorschlag der Erfindung besteht die Abdeckung des Aufnahmeraums der Ferrit-Antenne aus einem undurchsichtigen Material, damit die Antenne für Dritte nicht von außen sichtbar ist. Hierdurch wird die Gefahr einer Manipulation an dem Gerät verringert, die darin bestehen könnte, die Antenne durch eine Metallplatte oder dergleichen abzuschirmen, so daß sie die Signale nicht mehr empfangen kann.

Um zu verhindern, daß Unbefugte die Einstellung der Antenne verändern, was die Funktionsunfähigkeit des Gerätes zur Folge haben könnte, wird -wie bereits oben erwähnt- vorgeschlagen, die Abdeckung des Aufnahmeraums der Ferrit-Antenne so durch eine Verschlußeinrichtung zu sichern, daß sie nur gewaltsam geöffnet werden könnte, z.B. durch ein Schloß oder eine Plombierung. Es kann auch vorgesehen sein, daß der dem Aufnahmeraum der Ferrit-Antenne benachbarte Aufnahmeraum für die Steuerrelais, der durch eine Zwischenwand von dem Aufnahmeraum der Ferrit-Antenne und des Langwellenempfängers abgetrennt ist, eine plombierbare Abdeckung aufweist, die im geschlossenen Zustand einen Randbereich der Abdeckung des Aufnahmeraums der Ferrit-Antenne so überdeckt, daß diese Abdeckung nicht geöffnet werden kann, ohne zuvor den Deckel der Relais-Kammer zu öffnen.

Um die optimale Einstellung der Ferrit-Antenne zu erleichtern, kann diese mit einer akustischen Anzeigeeinrichtung oder mit Leuchtdioden verbunden sein, die die optimale Ausrichtung der Antenne auf den Sender anzeigen.

Nach einem weiteren wesentlichen Gesichtspunkt der Erfindung kann der Funk-Rundsteuerempfänger eine Parametrierschnittstelle haben, die über ein Parametrierkabel oder serielles Datenkabel mit einem batteriebetriebenen PC verbunden werden kann, von dem ein Parametrierprogramm in den Rundsteuerempfänger eingegeben werden kann. Diese Ausbildung hat den Vorteil, daß zum Programmieren des Rundsteuerempfängers kein Netzanschluß erforderlich ist, was die Handhabbarkeit des Rundsteuerempfängers erheblich vereinfacht. Die Parametrierschnittstelle dient aber nicht nur dem Einlesen des Parametrierprogramms (sowie dessen Auslesen und Verändern), sondern sie kann nach einem weiteren Vorschlag der Erfindung noch zwei weitere Funktionen ausüben: es können akustische Ausrichthilfen, Lautsprecher und Ohrhörer bevorzugt über Verstärker angeschlossen werden, oder -als dritte Funktion- eine optische Feldstärkeanzeige, um die optimale Ausrichtung der Antenne auf den Sender zu erleichtern. Nähere Einzelheiten der erfindungsgemäßen Parametrierschnittstelle sind dem Blockschaltbild gemäß Fig. 9 zu entnehmen.

Der Funk-Rundsteuerempfänger kann außerdem einen Speicher haben, in dem die dekodierten Schalttelegramme abgelegt werden. Bei unterbrochener Verbindung kann automatisch auf ein im Programmspeicher hinterlegtes individuelles Grundprogramm zurückgegriffen werden, wobei auch vorgesehen sein kann, daß im Falle der Verwendung zum Schalten von Mehrtarifzählern automatisch auf Hochtarif geschaltet wird.

Die Erfindung sieht demnach einen Funk-Rundsteuerempfänger vor, der eine integrierte Ferrit-Antenne hat, die am Einbauort auf den Sender ausgerichtet werden kann. Die Ferrit-Antenne ist horizontal angeordnet und um mindestens 180° drehbar, so daß sie optimal ausgerichtet werden kann. Der Antennenaufnahmeraum wird dann von einer bevorzugt undurchsichtigen Kappe verschlossen, die z.B. von einer plombierbaren Abdeckung des benachbarten Relais-Aufnahmeraums so überdeckt werden kann, daß die Kappe des Antennen-Aufnahmeraums von Unbefugten nicht mehr zu öffnen ist.

In einer alternativen Ausführungsform kann auch vorgesehen sein, daß die Abdeckung des Antennenaufnahmeraums abschließbar oder selbst plombierbar ist, so daß auf diese Weise ein unbefugtes Öffnen des Zugangs zu der Antenne sichtbare Spuren hinterlassen würde.

Obwohl bei dem erfindungsgemäßen Funk-Rundsteuerempfänger die Antenne zusammen mit elektrischen oder elektronischen Bauteilen, die bei der Signalverarbeitung Störungen hervorrufen, in einem kleinen Gehäuse nahe beieinander angeordnet sind, lassen sich die Funksignale infolge der erfindungsgemäßen Ausgestaltung selbst dann hinreichend gut empfangen, wenn die Empfangsfeldstärke an den meist fest vorgegebenen Einbauort - im Falle des Umschaltens von Stromzählern im Gebäudekeller - ungünstig ist, wie sich überraschenderweise herausgestellt hat. Da die Ferrit-Antenne nach ihrer optimalen Ausrichtung für Unbefugte nicht zugänglich ist, sind auch den Empfang der Funksignale beeinträchtigende Manipulationen des Rundsteuerempfängers schlossen.

Die Relais sind selbstverständlich über Steuerkabel mit dem Zähler verbunden, wobei diese Steuerkabel in einem weiteren Aufnahmeraum des Gehäuses untergebracht sind, der ebenfalls plombierbar ist.

Bevorzugte Ausführungsformen der Erfindung werden nachfolgend anhand der Zeichnung beschrieben. Dabei zeigen:
- Fig. 1: eine rein schematische Darstellung des erfindungsgemäßen Funk-Rundsteuerempfängers;
- Fig. 2: eine Frontansicht des Funk-Rundsteuerempfängers mit teilweise weggeschnittene Abdeckung;
- Fig. 3: einen Längsschnitt durch den Funk-Rundsteuerempfänger gemäß Fig. 2;
- Fig. 4A und B: eine weitgehend schematische Frontansicht und Seitenansicht einer Anordnung aus Stromzähler und Funk-Rundsteuerempfänger.
- Fig. 5A und 5B: eine Frontansicht und eine Unteransicht (teilweise weggebrochen) eines Funk-Rundsteuerempfängers bei der Huckepack-Montage;
- Fig. 6A und 6B: eine Frontansicht und eine Ansicht von links (teilweise weggebrochen) eines Funk-Rundsteuerempfängers bei der Zählerkreuzmontage und
- Fig. 7: eine perspektivische Ansicht der erfindungsgemäßen Ferrit-Antenne;
- Fig. 8: die Halterung der Antenne in einer Aufsicht und zwei Seitenansichten und
- Fig. 9: ein Blockschaltbild der erfindungsgemäßen Parametrierschnittstelle.

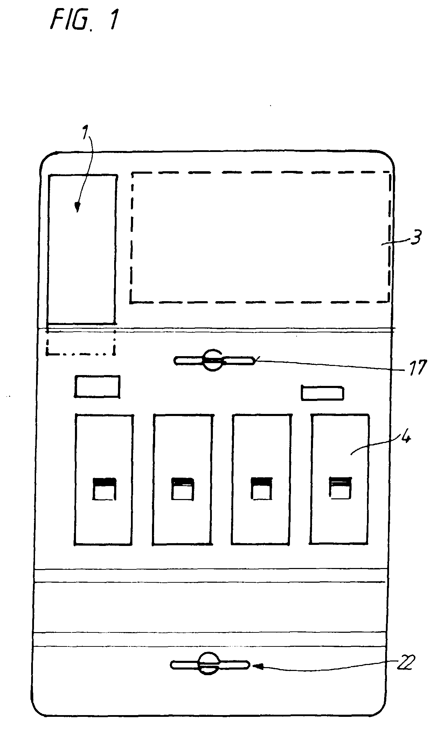

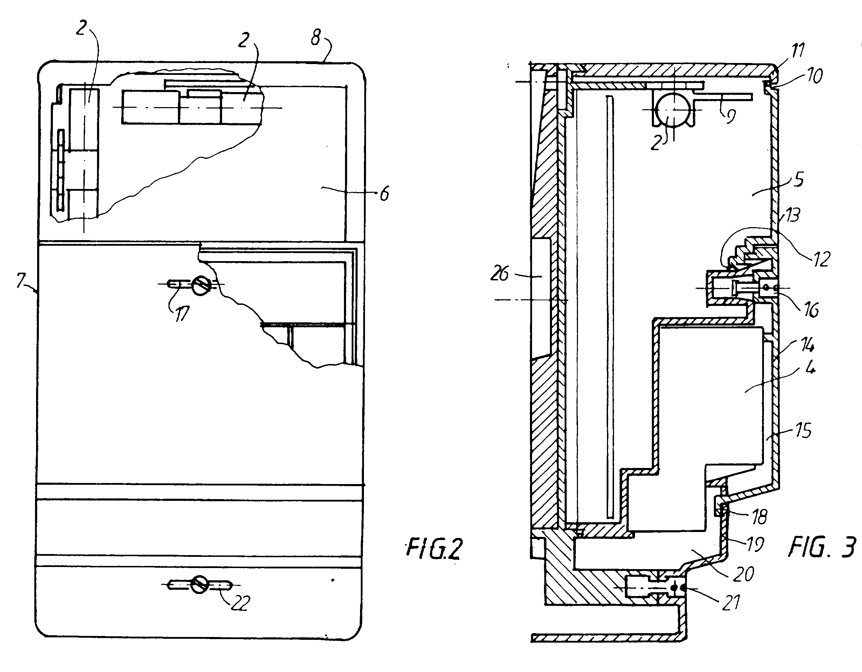

Fig. 1 zeigt auf rein schematische Weise, daß der Funk-Rundsteuerempfänger eine abnehmbare Kappe 1, hinter sich eine Ferrit-Antenne 2 (Fig. 2 und 3) befindet, einen integrierten, abgeschirmten Funk-Empfänger 3 und vier Relais 4 enthält. Die zugehörigen Kabel etc. sind in den Figuren weggelassen.

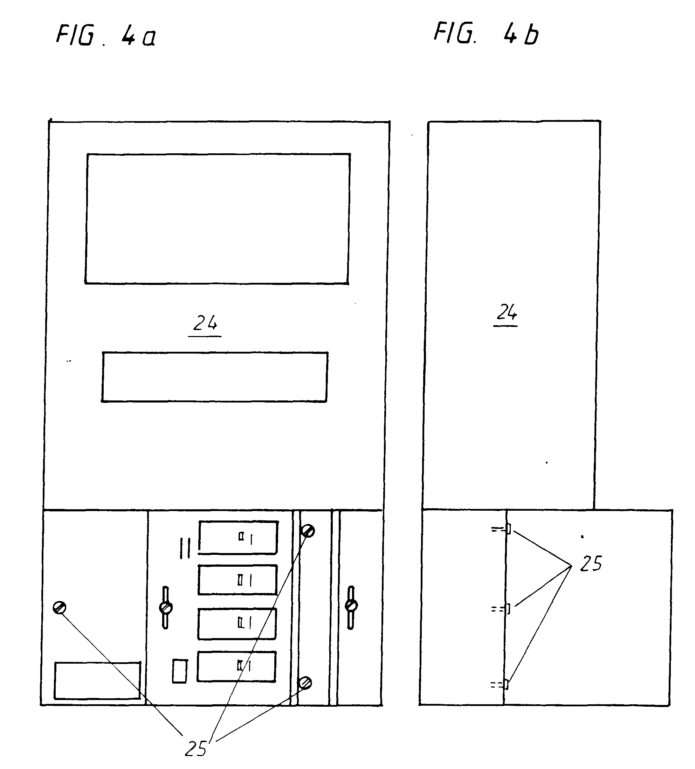

In den Fig. 2 und 3 ist zu sehen, daß die Ferrit-Antenne 2 an zwei verschiedenen Positionen angeordnet sein kann, und zwar einmal parallel zu den Längsseiten 7 oder in einer zu den Breitseiten 8 parallelen Lage. Da die Ferrit-Antenne in der Befestigungslage des Funk-Rundsteuerempfängers horizontal angeordnet sein muß, wird hierdurch die Möglichkeit geschaffen, den Funk-Rundsteuerempfänger entweder in der in Fig. 4A dargestellten Lage oder aber hierzu um 90° gedreht, d.h. mit vertikal ausgerichteten Längsseiten 7 an der Wand zu befestigen.

Wie bereits erwähnt, ist die Ferrit-Antenne 2 so befestigt, daß sie um 180° verschwenkt werden kann. Hierzu kann die Ferrit-Antenne 2 entweder mit einem Stift oder beispielsweise mit einem halbkreisförmigen Rändelrad 9 versehen sein, das sich von der Ferrit-Antenne 2 in Richtung der Öffnung des Aufnahmeraums erstreckt, so daß ein Benutzer mit Hilfe dieser Handhabe die Richtung der Antenne bei geöffneter Abdeckung 6 einstellen kann.

Die Kappe 6 untergreift mit einem abgesetzten Randabschnitt 10 einen Rand der Gehäusestirnwand 11 sowie mit einer Nase 12 den gegenüberliegenden Rand der Öffnung des Aufnahmeraums 5. Die Nase 12 ist gegenüber der Außenseite 13 der Kappe 5 nach innen versetzt, derart, daß ein abgewinkelter Randabschnitt der Kappe 5 entsteht, der von einer anschließenden Kappe 14 übergriffen wird, die den Relais-Aufnahmeraum 15 lösbar verschließt. Die Kappe 14 wird mit Hilfe einer Schraube 16 mit dem Gehäuse des Funk-Rundsteuerempfängers verschraubt und durch eine Plombe 17 versiegelt, nachdem die Ferrit-Antenne 2 eingestellt ist.

Auf der von der Schraube 16 abgewandten Seite untergreift die Kappe 14 mit einem Randabschnitt 18 eine weitere Kappe 19, die den Aufnahmeraum 20 für nicht dargestellte Steuerkabel lösbar verschließt. Die Kappe 19 ist ihrerseits mittels einer Schraube 21 an einer Gehäusewand befestigt und ebenfalls mit einer Plombe 22 gesichert.

In Fig. 3 ist ferner eine Platine 23 dargestellt, auf der die Dekodereinheit aufgebaut ist.

Fig. 4 zeigt die Anordnung eines erfindungsgemäßen Funk-Rundsteuerempfängers direkt unter einem Zähler 24, wobei der Funk-Rundsteuerempfänger mit Schrauben 25 an der Wand befestigt ist.

Bei der Ausführungsform der Fig. 3 ist in der Rückwand des Gehäuses eine Aussparung 26 ausgebildet, die die Befestigung des Gehäuses an einer Schiene ermöglicht.

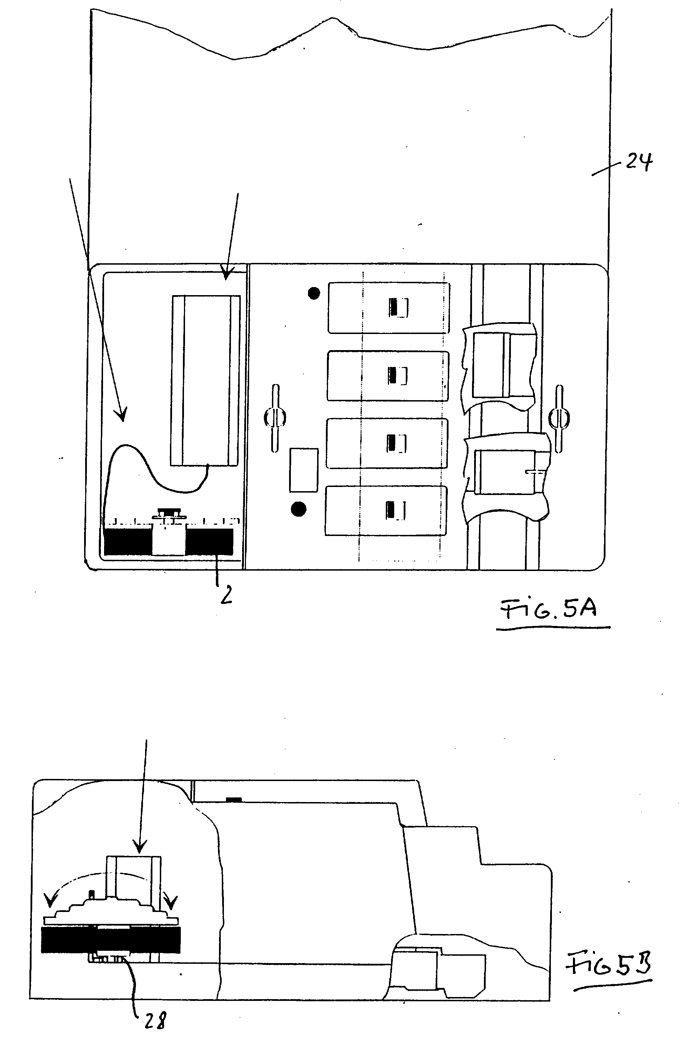

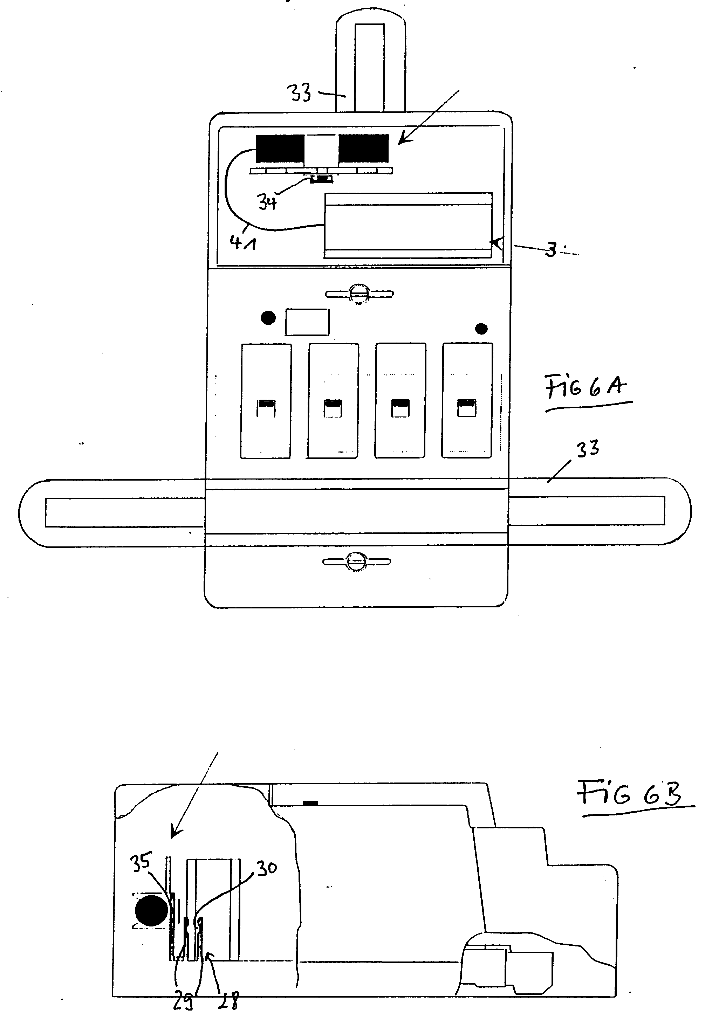

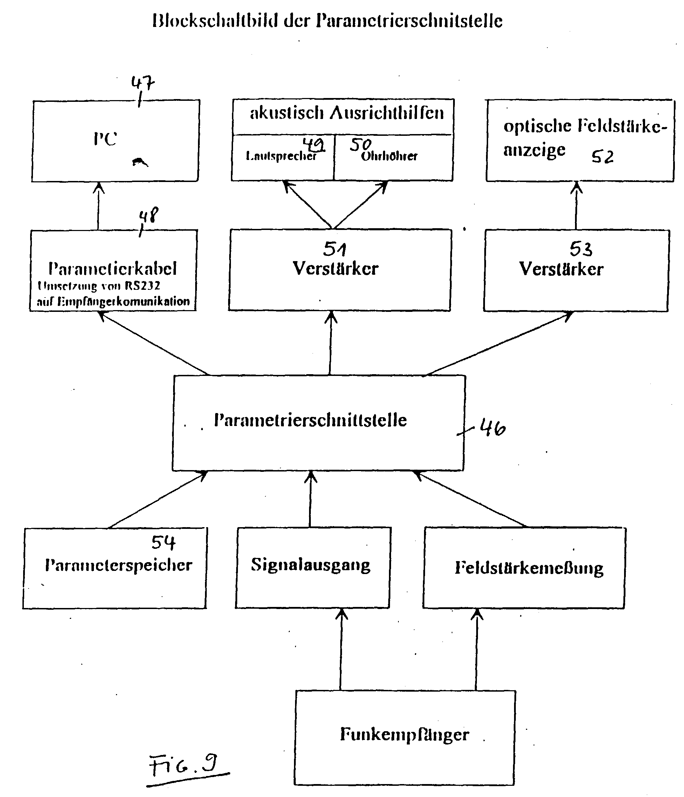

Die Figuren 5A und 5B zeigen einen Funk-Rundsteuerempfänger, der in der Huckepackmontage unter einem Stromzähler 24 angebracht ist. Die Darstellung zeigt, daß der Rundsteuerempfänger im Querformat eine Breite hat, die mit derjenigen des Zählers übereinstimmt. Bei dieser Montageart ist die Ferrit-Antenne 2 an einer Halterung 28 befestigt, die besser aus Fig. 6B ersichtlich ist. Die Halterung 28 besteht aus zwei im Abstand voneinander angeordneten Klemmarmen 29 mit einander gegenüberliegenden Ausnehmungen 30, die einen zylindrischen, eingeschnürten Ansatz 31 (siehe Fig. 8) an der Unterseite eines Antennenhalters 32 im Klemmsitz aufnehmen. Der Antennenhalter 32 wird hierdurch zusammen mit der Ferrit-Antenne 2 ohne zusätzliche Befestigungsmittel in der jeweils eingestellten Winkellage gehalten.

Die beispielsweise an der Gehäusewand angespritzten Klemmarme 29 halten die Antenne bei der Huckepackmontage in horizontaler Ausrichtung, wie die Figuren 5A und 5B zeigen.

Bei der in den Figuren 6A und 6B dargestellten Zählerkreuzmontage, bei der der Funk-Rundsteuerempfänger in aufrechter Lage an einem Zählerkreuz 33 montiert ist, ist die Antenne 2 an entsprechenden Klemmarmen 34 einer Halterung 35 befestigt, mit der die Antenne 2 wiederum in horizontaler Ausrichtung gehalten ist. Die Klemmarme 34 klemmen die Antennenhalterung 32 auf dieselbe Weise zwischen sich ein.

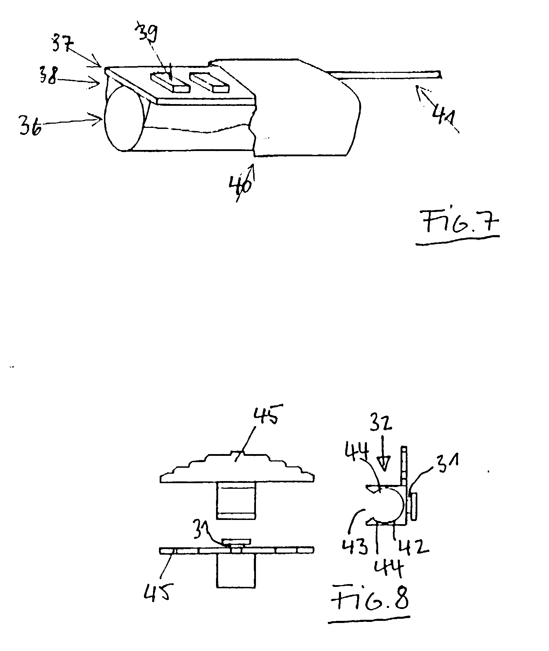

Fig. 7 zeigt den besonderen Aufbau der aktiven Ferrit-Antenne 2. An dem Ferritstab 36, auf dem eine nicht dargestellte Kupferwicklung angeordnet ist, ist eine Leiterplatte bzw. Platine 37 mit Klebstoff 38 befestigt. Die Leiterplatte 37 ist mit Kondensatoren 39 bestückt. Diese Anordnung ist von einem Isolierschlauch 40 überzogen, der als Schrumpfschlauch ausgebildet ist. Das Antennenkabel 41 führt zum Langwellenempfänger 3.

Die erfindungsgemäße Ferritantenne 2 gewährleistet selbst bei der bevorzugten geringen Baulänge von 50 mm einen guten Empfang der Funksignale, wenn sie mittels der Halterung 32 optimal ausgerichtet ist.

Die Halterung 32 enthält einen Abschnitt 42 mit einer im wesentlichen offenen Ringform, in der die durch die Öffnung 43 eingeführte Antenne 2 infolge der Federwirkung der beiden Arme im Klemmsitz sitzt. Mit diesem Klemmabschnitt 42 ist eine Handhabe 45 zum Verstellen der Winkellage der Antenne einstückig verbunden, die im wesentlichen die Form eines Abschnitts eines Rändelrades hat. Die Handhabe 45 ist in dem Zustand, in dem die Antenne 2 mittels der Halterung 32 an den Klemmarmen 29 oder 34 befestigt ist, der Abdeckung des Aufnahmeraums 5 der Antenne zugewandt, so daß bei abgenommener Abdeckung oder anderweitiger Öffnung des Aufnahmeraums 5 die Handhabe 45 zum Einstellen der Winkellage der Antenne 2 ergriffen werden kann.

Fig. 9 zeigt die erfindungsgemäße Parametrierschnittstelle 46 des Funk-Rundsteuerempfängers. An der Parametrierschnittstelle 46 kann ein batteriebetriebener PC 47 mittels eines Parametrierkabels 48 angeschlossen werden, wodurch der jeweilige Status des Empfängers ausgelesen, verändert oder auch eingelesen werden kann. Der Funk-Rundsteuerempfänger muß hierzu nicht an ein örtliches Stromnetz angeschlossen werden.

An die Parametrierschnittstelle 46 können auch akustische Ausrichthilfen, nämlich ein Lautsprecher 49 sowie Ohrhörer 50 über einen Verstärker 51 angeschlossen werden, um die optimale Ausrichtung der Antenne 2 zu erleichtern. Zu demselben Zweck kann auch eine optische Feldstärkeanzeige 52 über einen Verstärker 53 mit der Parametrierschnittstelle 46 verbunden werden.

Der Funk-Rundsteuerempfänger enthält ferner einen Parameterspeicher 54, wie bereits oben erwähnt ist. Der Funk-Rundsteuerempfänger ist ohne Anschluß an ein örtliches Stromnetz zu programmieren.

## Patentansprüche

1. Funk-Rundsteuerempfänger, insbesondere zum Umschalten von Stromzählern, mit einem Gehäuse, in dem sich eine Ferrit-Antenne (2), die in der Einbaulage des Funk-Rundsteuerempfängers horizontal angeordnet ist, ein Funk-Empfänger und eine Dekodereinheit befinden, wobei die Ferrit-Antenne (2) drehbar in einem Aufnahmeraum (5) des Gehäuses angeordnet ist, und der Aufnahmeraum (5) der Ferrit-Antenne (2) eine zu öffnende Abdeckung (1, 6) hat, so daß die Winkellage der Ferrit-Antenne (2) von außen einstellbar ist, und die Abdeckung (1) des Aufnahmeraums (5) so zu sichern ist, daß sie von Unbefugten nur gewaltsam geöffnet werden kann,
**dadurch gekennzeichnet,**
daß die Ferrit-Antenne (2) lösbar an einer von zwei Halterungen befestigbar ist, an denen die Antenne in zwei zueinander senkrechten Ebenen positionierbar ist, in denen die Antenne um mindestens 180° drehbar ist.

2. Funk-Rundsteuerempfänger nach Anspruch 1,
dadurch gekennzeichnet, daß die Ferrit-Antenne (2) einen Ferritstab (36), eine mit dem Ferritstab (36) verbundene Platine (37) und Kondensatoren (39) aufweist und von einem Schrumpfschlauch (40) überzogen ist.

3. Funk-Rundsteuerempfänger nach einem der Ansprüche 1 oder 2,
dadurch gekennzeichnet, daß die Abdeckung des Aufnahmeraums (5) der Ferrit-Antenne (2) eine abnehmbare Kappe (1, 6) ist.

4. Funk-Rundsteuerempfänger nach einem der Ansprüche 1 bis 3,
dadurch gekennzeichnet, daß die Abdeckung (1, 6) des Aufnahmeraums (5) der Ferrit-Antenne (2) undurchsichtig ist.

5. Funk-Rundsteuerempfänger nach einem der Ansprüche 1 bis 4,
dadurch gekennzeichnet, daß ein weiterer, getrennter Aufnahmeraum (15) für Relais (4) vorgesehen ist, der eine zu öffnende Abdeckung (14) aufweist, die plombierbar ist.

6. Funk-Rundsteuerempfänger nach Anspruch 5,
dadurch gekennzeichnet, daß die Abdeckung (14) des Aufnahmeraums (15) im geschlossenen Zustand einen Randbereich der Abdeckung (1, 6) des Aufnahmeraums (5) in deren geschlossenen Zustand überdeckt.

7. Funk-Rundsteuerempfänger nach einem der Ansprüche 1 bis 6,
dadurch gekennzeichnet, daß das Gehäuse ferner einen Aufnahmeraums (20) für Steuerkabel aufweist, dessen Abdeckung (19) plombierbar ist.

8. Funk-Rundsteuerempfänger nach einem der Ansprüche 1 bis 7,
dadurch gekennzeichnet, daß der Funk-Rundsteuerempfänger ferner eine Parametrierschnittstelle aufweist, über die er mit einem batteriebetriebenen PC programmierbar ist.

9. Funk-Rundsteuerempfänger nach Anspruch 8,
dadurch gekennzeichnet, daß ferner akustische Ausrichthilfen und eine optische Feldstärkeanzeige an die Parametrierschnittstelle als Justierungshilfen zum optimalen Ausrichten der Ferrit-Antenne auf einen Sender anschließbar sind.

## Claims

1. Radio-controlled teleswitch receiver, particularly for the switching-over of electricity meters, with a housing in which are arranged a ferrite aerial (2) disposed horizontally in the assembly position of the radio-controlled teleswitch receiver, a radio receiver and a decoding unit, wherein the ferrite aerial (2) is arranged rotatably in a reception space (5) of the housing, and the reception space (5) of the ferrite aerial (2) has an openable cover (1, 6) so that the angular position of the ferrite aerial (2) is adjustable from the outside, and the cover (1) of the reception space (5) is to be secured such that it may be only be opened with force by unauthorised persons, characterised in that the ferrite aerial (2) is releasably securable at one of two mounts at which the aerial is positionable at two mutually perpendicular planes into which the aerial is rotatable over at least 180°.

2. Radio-controlled teleswitch receiver according to claim 1, characterised in that the ferrite aerial (2) has a ferrite rod (36), a printed circuit board (37) connected to the ferrite rod (36) and capacitors (39) and is covered by a shrunk-on sheath (40).

3. Radio-controlled teleswitch receiver according to claims 1 or 2, characterised in that the cover of the reception space (6) for the ferrite aerial (2) is a removable cap (1, 6).

4. Radio-controlled teleswitch receiver according to one of claims 1 to 3, characterised in that the cover (1, 6) of the reception space (5) for the ferrite aerial (2) is non-transparent.

5. Radio-controlled teleswitch receiver according to one of claims 1 to 4, characterised in that a further separate reception space (15) is provided for relays (4), which has an openable and sealable cover (14).

6. Radio-controlled teleswitch receiver according to claim 5, characterised in that in the closed state the cover (14) of the reception space (15) covers over an edge region of the cover (1, 6) of the reception space (5) in its closed state.

7. Radio-controlled teleswitch receiver according to one of claims 1 to 6, characterised in that the housing has a further a reception space (20) for power cabling, the cover (19) of which is sealable.

8. Radio-controlled teleswitch receiver according to one of claims 1 to 7, characterised in that the receiver has furthermore a parametrisation interface by way of which the receiver is programmable with a battery-driven PC (programmable controller).

9. Radio-controlled teleswitch receiver according to claim 8, characterised in that, in addition, acoustic alignment aids and an optical field strength meter are connectable to the parametrisation interface to serve as adjustment assisters for the optimal alignment of the ferrite aerial with a transmitter.

## Revendications

1. Récepteur de télécommande centralisée par radio, notamment pour commuter des compteurs de courant, avec un boîtier dans lequel est disposé un cadre de ferrite (2) qui, en position de montage du récepteur de télécommande centralisée par radio est disposé horizontalement, un récepteur radio et une unité de décodage, où le cadre ferrite (2) est disposé d'une manière tournante dans un logement (5) du boîtier, et le logement (5) du cadre ferrite (2) présente un recouvrement ouvrant (1, 6) de telle sorte que la position angulaire du cadre ferrite (2) peut être réglée de l'extérieur et que le recouvrement (1) du logement (5) doit être assuré de façon qu'il puisse être ouvert par des personnes non autorisées seulement avec de la force,
**caractérisé en ce que,**
le cadre ferrite (2) peut être fixé amoviblement à l'un de deux organes de retenue auxquels le cadre peut être positionné dans deux plans perpendiculaires l'un à l'autre dans lesquels le cadre peut être tourné selon au moins 180°.

2. Récepteur de télécommande centralisée par radio selon la revendication 1, caractérisé en ce que le cadre ferrite (2) présente une tige de ferrite (36), une platine (37) reliée à la tige de ferrite (36) et des condensateurs (39) et est recouvert par une gaine rétrécissable (40).

3. Récepteur de télécommande centralisée par radio selon l'une des revendications 1 ou 2, caractérisé en ce que le recouvrement du logement (5) du cadre ferrite (2) est un capuchon (1, 6) pouvant être retiré.

4. Récepteur de télécommande centralisée par radio selon l'une des revendications 1 à 3, caractérisé en ce que le recouvrement (1, 6) du logement (5) du cadre ferrite (2) est opaque.

5. Récepteur de télécommande centralisée par radio selon l'une des revendications 1 à 4, caractérisé en ce qu'il est prévu un logement supplémentaire séparé (15) pour des relais (4), qui présente un recouvrement ouvrant (14) pouvant être plombé.

6. Récepteur de télécommande centralisée par radio selon la revendication 5, caractérisé en ce que le recouvrement (14) du logement (15), à l'état fermé, recouvre une zone de bord du recouvrement (1, 6) du logement (5) dans l'état fermé de celui-ci.

7. Récepteur de télécommande centralisée par radio selon l'une des revendications 1 à 6, caractérisé en ce que le boîtier présente en outre un logement (20) pour des câbles de commande dont le recouvrement (19) peut être plombé.

8. Récepteur de télécommande centralisée par radio selon l'une des revendications 1 à 7, caractérisé en ce que le récepteur de télécommande centralisée par radio présente en outre une interface de paramétrage par laquelle il peut être programmé avec un PC à batterie.

9. Récepteur de télécommande centralisée par radio selon la revendication 8, caractérisé en ce qu'en outre des aides d'orientation acoustiques et un indicateur optique de force de champ peuvent être raccordés à l'interface de paramétrage en tant qu'aides d'ajustement en vue de l'orientation optimale du cadre ferrite vers un émetteur.
